# EUROPÄISCHE PATENTSCHRIFT

(11) **EP 1 322 881 B1**
(45) Veröffentlichungstag und Bekanntmachung des Hinweises auf die Patenterteilung: **26.01.2005**
(21) Anmeldenummer: 01982315.2
(22) Anmeldetag: 19.09.2001
(51) Int. Cl.: F16K 31/40

(54) **ELEKTROMAGNETISCH BETÄTIGBARE VENTILEINRICHTUNG UND VENTILVORRICHTUNG**
ELECTROMAGNETICALLY ACTUATED VALVE SYSTEM AND VALVE DEVICE
ENSEMBLE SOUPAPE A COMMANDE ELECTROMAGNETIQUE ET DISPOSITIF DE SOUPAPE

(30) Priorität: 22.09.2000 DE 10046979
(43) Veröffentlichungstag der Anmeldung: 02.07.2003
(73) Patentinhaber: KNORR-BREMSE SYSTEME FÜR NUTZFAHRZEUGE GMBH, 80809 München (DE)
(72) Erfinder: STUMPE, Werner, 70378 Stuttgart (DE)
(86) Internationale Anmeldenummer: PCT/EP2001/010795
(87) Internationale Veröffentlichungsnummer: WO 2002/025155

(56) Entgegenhaltungen:
- EP-A- 0 305 710
- DE-A- 3 823 569
- US-A- 4 893 645

## Beschreibung

Die Erfindung betriff eine elektromagnetisch bettätigbare Ventileinrichtung, im einzelnen mit den Merkmalen aus dem Oberbegriff des Anspruchs 1; ferner eine kombinierte Ventilvorrichtung.

Eine elektromagnetisch betätigbare Ventileinrichtung zur Gewährleistung unterschiedlicher Funktionen ist aus der Druckschrift EP 0 305 710 A2 bekannt. Die Kombination derartiger Ventileinrichtungen - einer ersten elektromagnetisch betätigbaren Ventileinrichtung und einer zweiten elektromagnetisch betätigbaren Ventileinrichtung - zu einer kombinierten Ventilvorrichtung ist ebenfalls dieser Druckschrift zu entnehmen. Beide sind in diesem Fall in einem gemeinsam nutzbaren Gehäuse integriert. Die erste elektromagnetisch betätigbare Ventileinrichtung dient dabei der Steuerung der Verbindung zwischen einer Druckmittelquelle und einem Verbraucher oder einer Verbraucheranlage, d.h. einer Mehrzahl von Verbrauchern, während die zweite Ventileinrichtung zur Steuerung der Druckentlastung des Verbrauchers oder der Verbraucheranlage eingesetzt wird. Beide Ventileinrichtungen der kombinierten Ventileinrichtung sind vorzugsweise identisch aufgebaut, um ein hohes Maß an Standardisierung hinsichtlich der Ausgestaltung der Einzelelemente zu erzielen. Die erste Ventileinrichtung weist eine mit der Druckmittelquelle über einen entsprechenden Anschluß verbindbare Einlaßkammer und eine mit einem Verbraucher bzw. einer Verbraucheranlage verbindbare Arbeitskammer auf, wobei zwischen beiden Kammern ein Hauptventil angeordnet ist. Dieses besteht aus einem beweglichen Hauptventilglied und einem gehäusefesten Ventilsitz. Im Gehäuse der ersten Ventileinrichtung sind ferner neben der Einlaßkammer und der Arbeitskammer eine Vorsteuerkammer und eine Ausgleichskammer vorgesehen. Zur Steuerung der Bewegung des Hauptventilgliedes ist ein Stellglied vorgesehen. Das Stellglied ist derart ausgeführt, daß es auf einer ersten, der Einlaßkammer zugeordneten Fläche in Öffnungsrichtung des Hauptventils vom Einlaßdruck beaufschlagt wird, während an einer zweiten, der Vorsteuerkammer zugeordneten Fläche des Stellgliedes in Schließrichtung des Hauptventils der Druck in der Vorsteuerkammer anliegt. Dabei ist die zweite Fläche größer als die erste Fläche. Die Vorsteuerkammer ist über ein Vorsteuerventil mit der Arbeitskammer verbindbar. Das Vorsteuerventil wird dabei von einem beweglichen Vorsteuerventilglied und einem.mit dem Anker des Betätigungsmagneten verbundenen Vorsteuerventilkörpers gebildet. Das Hauptventilglied und das Vorsteuerventilglied sind derart fest gekoppelt, daß eine Bewegung des Hauptventilgliedes in Öffnungsrichtung des Hauptventiles zugleich eine Bewegung des Vorsteuerventilgliedes in Schließrichtung des Vorsteuerventils ist. Die Vorsteuerkammer ist über eine Drosselverbindung mit der Einlaßkammer verbunden. Die Drosselverbindung ist so bemessen, daß diese bei geringem Öffnungsquerschnitt des Vorsteuerventils einen wenigstens gleich großen Druckmitteldurchsatz in die Vorsteuerkammer wie das Vorsteuerventil aus der Vorsteuerkammer und bei zunehmendem Öffnungsquerschnitt des Vorsteuerventiles einen geringeren Druckmitteldurchsatz in die Vorsteuerkammer als das Vorsteuerventil aus der Vorsteuerkammer zuläßt. Die zweite Ventileinrichtung, welche vorzugsweise analog zur ersten Ventileinrichtung hinsichtlich des Stellglieds, der Betätigungseinrichtung und der Funktionsweise von Haupt- und Vorsteuerventil aufgebaut ist, weist eine mit der Verbraucheranlage verbundene Arbeitskammer auf, welche bei der kombinierten Ventilvorrichtung gleichzeitig die Auslaßkammer der ersten Ventileinrichtung darstellt und eine mit einem Auslaß verbundene Auslaßkammer, zwischen denen ein aus einem gehäusefesten Ventilsitz und einem beweglichen Hauptventilglied bestehendes Hauptventil angeordnet ist, wobei der Auslaß wenigstens mittelbar mit einem Druckentlastungsraum verbunden ist. Des weiteren ist in Analogie zur ersten Ventileinrichtung eine die Bewegung des Hauptventils steuernde Stelleinrichtung und eine Vorsteuerkammer vorgesehen. Das Stellglied wird auf einer ersten, der Arbeitskammer zugeordneten Fläche in Öffnungsrichtung des Hauptventils vom Verbraucherdruck beaufschlagt. Auf einer zweiten der Vorsteuerkammer zugeordneten Fläche wird das Stellglied in Schließrichtung des Hauptventils vom Druck in der Vorsteuerkammer beaufschlagt. Die zweite Fläche ist dabei ebenfalls größer als die erste Fläche. Die Vorsteuerkammer ist über ein Vorsteuerventil mit der Auslaßkammer verbindbar. Das Vorsteuerventil wird von einem beweglichen Vorsteuerventilglied und einem mit dem Anker des Betätigungsmagneten verbundenen Vorsteuerventilkörpers gebildet. Hauptventilglied und Vorsteuerventilglied sind dabei derart fest gekoppelt, daß eine Bewegung des Hauptventilgliedes in Öffnungsrichtung des Hauptventils zugleich eine Bewegung des Vorsteuerventilgliedes in Schließrichtung des Vorsteuerventils ist. Die Vorsteuerkammer ist über eine weitere Drosselverbindung mit der Auslaß- d. h. in diesem Fall der Entlastungskammer verbunden.

Die in dieser Druckschrift offenbarten Ventileinrichtungen sind konstruktiv sehr aufwendig und montageintensiv. Insbesondere die Ausführungen gemäß der Druckschrift EP 0 305 710 A2 beinhalten eine Stelleinrichtung mit Ventil und Schaltkolben an den Enden. Der dünnere Teil der Stelleinrichtung wird dabei durch eine Trennwand geführt. Zur Sicherstellung der Kraftübertragung sind die einzelnen Einzelteile miteinander vernietet. Der Aufbau der Stelleinrichtung vergrößert den erforderlichen Bauraum für die einzelne Ventileinrichtung. Desweiteren ist es für eine Ventileinrichtung gemäß der genannten Druckschrift nicht möglich, eine Überprüfung der Ventilsitze ohne Zerstörung der einzelnen Ventileinrichtungen bzw. der kombinierten Ventilvorrichtung vorzunehmen. Auch der Ersatz des elastischen Ventilsitzteiles des Hauptventiles bedingt einen hohen Aufwand. Bei Reparaturen oder einer Wartung sind dabei Beschädigungen an anderen - ursprünglich nicht betroffenen - Teilen nicht auszuschließen. Eine Instandsetzung dieser Ventileinrichtung ist somit mit Risiken behaftet, weshalb sich bei Schädigungen - unabhängig welchen Grades - immer ein Austausch der kompletten Ventileinrichtung oder sogar der gesamten Ventilvorrichtung empfielt.

Eine andere Ausführung einer kombinierten Ventilvorrichtung ist der Druckschrift EP 0 145 858 zu entnehmen. Diese weist Durchbrüche im Steuerkolben auf, welche mittels eines Magnetventieles überwacht werden. Mit den 3/2 Magnetventilen sind die Steuerkammern an den Eingangsdruck oder den jeweils nachgeschalteten Druck anlegbar.

Aus der Druckschrift EP 0 095 782 ist ein kompaktes Steuerventil für hydraulische Präzisionssteuerungen, umfassend ein Vorsteuerventil und ein Hauptventil, vorbekannt, wobei jedoch das Hauptventilglied gleichzeitig den Ventilsitz für den Vorsteuerventilkörper, d. h. das Vorsteuerventilglied bildet. Beide sind hinsichtlich ihrer Funktion miteinander gekoppelt, insbesondere bewirkt die Betätigung des Hauptventiles gleichzeitig eine Betätigung des Vorsteuerventiles. Der Ventilsitz des Hauptventiles wird von einer Gehäusebohrung gebildet, in welcher das Vorsteuerventilglied geführt wird. Reperaturen erfordern die vollständige Demontage der Ventilvorrichtung. Die Beschädigung des Hauptventilsitzes erfordert einen Austausch der Gesamtvorrichtung.

Bei der Ausführung gemäß der Druckschrift DE 39 31 761 A1 handelt es sich um eine Ventileinrichtung, umfassend ein Vorsteuerventil, welche räumlich durch einen Steuer- und Anschlußbohrungen tragenden Einsatz getrennt sind und über diesen funktionell miteinander koppelbar sind.
Diese Lösung bietet zwar den Vorteil einer einfachen Austauschbarkeit der beiden miteinander gekoppelten Ventileinrichtungen, allerdings erfordern Austausch- und Wartungsarbeiten immer eine vollständige Demontage der einzelnen Ventileinrichtung - Relaisventil oder Steuerventil.

Aus der Druckschrift US 4 893 645 A ist ein vorgesteuertes Membranventil bekannt. Das Vorsteuerventil in diesem Dokument hat keinen Kontakt mit dem Hauptventilglied. Dieses Dokumnet wird als nächstliegender Stand der Technik angegeben und korrespondiert mit dem Oberbegriff des Anspruchs 1.

Der Erfindung liegt daher die Aufgabe zugrunde, eine Ventileinrichtung und insbesondere eine kombinierte Ventilvorrichtung zur feinstufigen Steuerung der Verbindung zwischen einer Druckmittelquelle und einer Verbraucheranlage sowie zur Steuerung der Druckentlastung der Verbraucheranlage zu schaffen, welche montage- und wartungsbeziegungsweise reparaturfreundlich ist. Das erforderliche Bauvolumen ist bei gleichbleibenden oder erhöhten Fluid- insbesondere Luftdurchsatz zu reduzieren. Ein weiterer Aspekt besteht in der einfachen Fertigung der Einzelelemente der einzelnen Ventileinrichtungen und insbesondere der kombinierten Ventilvorrichtung. Die Anforderungen an die Reparaturfreundlichkeit schließt eine mögliche Überprüfbarkeit der Güte von Ventil-Paarungen ein, so daß bei gutem Befund eine Weiterverwendung der bereits in Betrieb befindlichen Ventilpaarungen möglich sein sollte. Bei einem erforderlichen Austausch sollten dann nur die defekten Teile zu ersetzen sein, während die nicht beschädigten Einzelelemente weiterhin im Einsatz bleiben.

Die erfindungsgemäße Lösung ist durch die Merkmale der Ansprüche 1 und 17 charakterisiert. Vorteilhafte Ausgestaltungen sind jeweils in den Unteransprüchen wiedergegeben.

Die elektromagnetisch betätigbare Ventileinrichtung umfaßt eine elektromagnetische Betätigungsvorrichtung, ein, zwischen einer Einlaßkammer und einer Auslaßkammer angeordnetes, ein Hauptventilglied und einen ortsfesten Ventilsitz aufweisendes Hauptventilglied, des weiteren eine Vorsteuerkammer, welche über ein Vorsteuerventil mit der Auslaßkammer verbunden ist. Das Vorsteuerventil umfaßt ein Ventilglied und einen Ventilkörper, weicher mit einem, mit einem Betätigungsmagneten gekoppelten Anker der elektromagnetischen Betätigungsvorrichtung verbunden ist. Das Hauptventilglied und das Vorsteuerventilglied sind frei von einer baulichen Kopplung miteinander, d. h., daß eine Bewegung des Hauptventilgliedes in Öffnungsrichtung des Hauptventils gegenüber einer gattungsgemäßen Ventileinrichtung nicht zugleich eine Bewegung des Vorsteuerventilkörper in Schließrichtung des Vorsteuerventils ist. Das Hauptventilglied wird von einem Bauelement gebildet, welches auch als Schließkörper bezeichnet wird. Erfindungsgemäß wird der ortsfeste Sitz für das Hauptventilglied von einem im Gehäuse der elektromagnetisch betätigbaren Ventileinrichtung anordenbaren wenigstens zweiteiligen Einsatz gebildet. Der Schließkörper bildet mittels entsprechender Dichteinrichtungen mit dem Einsatz und eventuell dem Gehäuse die Vorsteuerkammer, wobei die Vorsteuerkammer derart angeordnet ist, daß der Druck in dieser das Hauptventilglied auf der von der der Einlaßkammer weggerichteten Stirnfläche beaufschlagt. Die Kopplung zwischen der Einlaßkammer und der Vorsteuerkammer erfolgt über mindestens einen, sich durch den Schließkörper erstreckenden axialen Kanal. Das Vorsteuerventilglied wird von einem in das Gehäuse der Ventileinrichtung einspannbaren wenigstens zweiteiligen Einsatz oder dem Gehäuse gebildet, wobei die Verbindung zwischen Vorsteuerventil und Auslaßkammer über mindestens einen im Gehäuse und/oder im Einsatz angeordneten Verbindungskanal erfolgt.

Die Vorsteuerkammer ist druckmitteldicht gegenüber der Einlaßkammer und Auslaßkammer ausgeführt. Beide Ventile der Ventileinrichtung - Hauptventil und Vorsteuerventil - sind parallel bzw. nebeneinander, d. h. in zwei parallen Ebenen angeordnet.

Durch das Vorsehen des wenigstens zweiteiligen Einsatzes, der Zuordnung der Vorsteuerkammer zum Schließkörper und der Ausbildung der Verbindungskanäle in den Funktionselementen, d. h. im das Hauptventilglied bildenden Schließkörper und im das Vorsteuerventilglied bildenden Einsatz oder Gehäuseteil wird eine einfach montier- und demontierbare Ventileinrichtung geschaffen, die gleichzeitig sehr wartungsund reparaturfreundlich ist, wobei bei der Demontage Beschädigungen benachbarter Bauelemente nicht zwingend zu erwarten sind. Da die Ausbildung der zur Erzeugung der Ventilpaarungen erforderlichen Flächen an unterschiedlichen Elementen erfolgt, ist ein Austausch der defekten Bestandteile unabhängig von der weiteren Nutzung der anderen Ventilpaarungen möglich. Durch die sehr gedrängte Bauweise in axialer Richtung, d. h. in Zuströmrichtung vom Zulauf bzw. der Einlaßkammer her betrachtet, und Zusammenfassung der Funktionseinheiten auf sehr engem Raum konnte das benötigte Bauvolumen bei gleichbleibendem oder erhöhtem Fluid- insbesondere Luftdurchsatz erheblich reduziert werden.

Die erfindungsgemäß gestaltete elektromagnetisch betätigbare Ventileinrichtung ist zur Realisierung unterschiedlichster Aufgaben geeignet. Diese ist entsprechend der Anordnung in pneumatischen Kreisläufen oder der Zuordnung zu einzelnen Elementen eines derartigen Kreislaufes entweder als
1) Steuerventil zur Steuerung der Verbindung zwischen einer Druckmittelquelle und einer nicht dargestellten Verbraucheranlage oder als
2) Druckentlastungsventil zur Steuerung der Druckentlastung eines Verbrauchers oder mehrerer Verbraucher einsetzbar.

Im erstgenannten Fall ist die Einlaßkammer mit einer Druckmittelquelle koppelbar, während die Auslaßkammer als Arbeitskammer fungiert und mit einem Verbraucher gekoppelt ist. Im zweiten Fall wird die Einlaßkammer von der Arbeitskammer gebildet, die mit einem Verbraucher gekoppelt ist, während der Auslaß mit einem Entlastungsraum verbindbar ist.

Unter einem weiteren Aspekt der Erfindung ist es jedoch auch möglich eine erfindungsgemäß gestaltete Ventileinrichtung derart einer beliebigen konventionellen Ventileinrichtung zuzuordnen, daß entweder die unter 1. genannte Aufgabe oder die unter 2. genannte Aufgabe von der Ventileinrichtung übernommen wird.

Vorzugsweise werden beide Ventileinrichtungen in einer kombinierten Ventilvorrichtung zur Erfüllung der beiden vorgenannten Aufgaben zusammengefaßt. In diesem Fall erfolgt der Aufbau und die Auslegung der Einzelelemente der Haupt- und Vorsteuerventile vorzugsweise identisch. Dies bietet den Vorteil, daß ein hoher Grad an einheitlich gestalteten Teilelementen erzeugt wird, was insbesondere auch beim erforderlichem Austausch einzelner Elemente von Vorteil ist, da die Lagerhaltung auf Grund der geringen Anzahl unterschiedlicher Bauelemente reduziert wird. Zu diesem Zweck sind zwei erfindungsgemäß gestaltete elektromagnetisch betätigbare Ventileinrichtungen in einem Gehäuse zusammengefaßt, welches drei Anschlüsse - einen Zulauf, welcher mit einer Druckmittelquelle koppelbar ist, einen Ablauf, welcher mit einem Verbraucher wenigstens mittelbar gekoppelt ist und einen Entlastungsanschluß, welcher wenigstens mittelbar mit einem Entlastungsraum verbunden ist - aufweist. Daher wird der Ablauf der ersten Ventileinrichtung und der Zulauf zur zweiten Ventileinrichtung von einem gemeinsamen Anschluß zum Verbraucher gebildet, das heißt ein Anschluß wird gemeinsam benutzt. Diese kombinierte Ventileinrichtung dient zum einen der Steuerung der Verbindung zwischen dem Zulauf von der Druckmittelquelle zum Verbraucher und des weiteren der Steuerung der Druckentlastung in der mit dem Verbraucher gekoppelten Arbeitskammer. Beide Ventileinrichtungen sind hinsichtlich der Betätigungseinrichtung und dem Schließkörper identisch aufgebaut. Bezüglich der Einsätze im gemeinsamen Gehäuse bestehen jedoch Unterschiede, da die Begrenzung zwischen beiden Ventileinrichtungen nicht von der Gehäusewand sondern vom Einsatz bzw. einem der Einsätze gebildet wird. Die Einsätze sind für jede Ventileinrichtung vorzugsweise mehrteilig ausgeführt, um eine einfache Montage und Demontage der einzelnen Elemente der Ventileinrichtung, insbesondere des Schließkörpers zu ermöglichen. Der Schließkörper selbst ist als Kolbenelement ausgeführt, welcher zur Bildung des Hauptventils einen kolbenartig erweiterten Endbereich aufweist, der jeweils entsprechend der Art der Ventileinrichtung an dessen Stirnfläche - erster Ventileinrichtung oder zweiter Ventileinrichtung - vom Druck in der Einlaßkammer oder vom Druck in der Arbeitskammer beaufschlagt wird. Die Verbindung zwischen der Einlaßkammer und der Vorsteuerkammer erfolgt über einen sich in axialer Richtung durch den Schließkörper erstreckenden Kanal. Dieser dient somit der Bildung einer Konstantdrossel im Eintrittsbereich in den axialen Kanal am Schließkörper. Durch die entsprechende Betätigung des Vorsteuerventilkörpers, welcher mit einem Ankerelement der elektromagnetischen Betätigungsvorrichtung gekoppelt ist, wird eine steuerbare Drossel gebildet, welche der Konstantdrossel nachgeschaltet ist.

Beide Ventileinrichtungen - erste Ventileinrichtung und zweite Ventileinrichtung - weisen jeweils eine elektromagnetische Betätigungsvorrichtung auf. Diese umfaßt mindestens einen Betätigungsmagneten, welcher mit einem Anker verbunden ist. Der Anker wiederum ist wenigstens mittelbar, vorzugsweise direkt mit dem Ventilkörper der Vorsteuerventileinrichtung verbunden. Bezüglich der Wirkungsweise und damit der Erzielung der einzelnen Funktionsstellungen der Vorsteuerventileinrichtung einer jeden Ventileinrichtung bestehen im wesentlichen die beiden nachfolgend genannten Möglichkeiten:
1. Auswahl eines Betätigungsmagneten mit einer ansteigenden Hub/Stromcharakteristik, das heißt der Ventilkörper wird in die entsprechende Funktionsstellung gezogen.
2. Ausbildung des Betätigungsmagneten mit einer abfallenden Hub/Stromcharakteristik, das heißt Realisierung der Funktionsstellungen des Ventilkörpers durch Druck.

Bei Zusammenfassung der beiden Ventileinrichtungen in einer kombinierten Ventilvorrichtung werden vorzugsweise beide Ventileinrichtungen mit identischer Betätigungseinrichtung verwendet, so daß die zur Realisierung der Funktionsweise der kombinierten Ventileinrichtung erforderlichen Stellungen entweder durch Bestromung oder Nichtbestromung eines einzelnen Ankerelementes realisiert werden. Die Ausnutzung dieser Möglichkeit bietet den Vorteil, daß der Grad der Standardisierung für die Ausgestaltung derartiger Ventileinrichtungen für unterschiedliche Anwendungszwecke und Verwendung in Kombination in einer kombinierten Ventilvorrichtung erheblich gesteigert werden kann. Dies bietet des weiteren den Vorteil, daß bei einem eventuell erforderlichen Austausch, insbesondere bei kombinierten Ventileinrichtungen, nicht auf unterschiedliche Betätigungsvorrichtungen geachtet werden muß.

. Die konkrete Ausgestaltung der Einzelelemente der einzelnen Ventileinrichtungen kann auch unterschiedlich erfolgen. Vorzugsweise wird jedoch zumindest der Schließkörper symmetrisch bezüglich einer Achse ausgeführt. Der Schließkörper ist als Kolbenelement, das heißt als Element mit unterschiedlichen Abmessungen im Querschnitt betrachtet ausgeführt. Zur Bildung der Vorsteuerkammer und zur einfachen Montage und Demontage ist der Einsatz mehrteilig, vorzugsweise zweiteilig ausgeführt.

Bezüglich der Ausführung der Einsätze bestehen eine Mehrzahl von Möglichkeiten. Diese sind bei Ausführung als Einzelventileinrichtung, das heißt mit lediglich einem Schließkörper und einer Betätigungsvorrichtung zum Einsatz zwischen einem Zulauf und einem Ablauf vorzugsweise symmetrisch aufgebaut. Im einfachsten Fall wird auch hier eine zweiteilige Ausführung gewählt. Dabei bildet das in Zulaufrichtung vom Zulauf erste Einsatzteilelement den Ventilsitz des Hauptventiles. Zur Bildung der Vorsteuerkammer ist zwischen der vom Zulauf weggerichteten Stirnfläche des Schließkörpers im Bereich der Bildung des Hauptventiles eine Dichteinrichtung vorgesehen, welche an dieser Fläche anliegt und am Einsatz, entweder am ersten Einsatzteilelement oder am zweiten Einsatzteilelement befestigt ist. Diese Dichteinrichtung ist vorzugsweise als elastische Membran ausgeführt. Vorzugsweise sind zwischen dem Hautpventilsitz und dem mit diesen in Wirkverbindung tretenden Flächen am Hauptventilglied ebenfalls Dichteinrichtungen vorgesehen. Diese können entweder am ortsfesten Ventilsitz oder am Schließkörper angeordnet sein. Vorzugsweise erfolgt die Anordnung am Schließkörper.

Das zweite Einsatzteilelement bei zweiteiliger Ausführung des Einsatzes ist dem ersten, in Zuströmrichtung vom Zulauf aus betrachtet, nachgeordnet und bildet weitere Begrenzungswände der Vorsteuerkammer. Die Verbindung zwischen dem Vorsteuerventil und dem Auslaß erfolgt über entsprechende Durchgangsöffnungen im Gehäuse oder am Einsatz, . vorzugsweise dem ersten und dem zweiten Einsatzteilelement außerhalb des Bereiches der Vorsteuerkammer.

Bei Ausführung als kombinierte Ventilvorrichtung, das heißt Zusammenfassung der beiden Ventileinrichtungen und Zuordnung zu den drei oben genannten Anschlüssen erfolgt die Ausgestaltung der Einsätze derart, daß auch hier ein möglichst hoher Grad an Standardisierung erzielt wird, das heißt der Anteil der Elemente mit identischem Aufbau möglichst hoch ist.

Besonders vorteilhaft ist die Ausführung bei einer kombinierten Ventilvorrichtung, bei welcher die zur Bildung der Vorsteuerkammer verwendete Membran sich über beide Ventileinrichtungen erstreckt und somit zwischen dem ersten und dem zweiten Einsatzteilelement der Einsätze für die erste und die zweite Ventileinrichtung angeordnet ist, beispielsweise zwischengeklemmt wird. Zur Verbindung der einzelnen Vorsteuerventile mit den entsprechenden Auslässen, das heißt erster Vorsteuerventileinrichtung mit der Arbeitskammer und zweiter Vorsteuerventileinrichtung mit dem Entlastungsraum, ist mindestens ein entsprechender Durchbruch in der Dichteinrichtung, beispielsweise in Form von Durchgangsöffnungen vorgesehen.

Bei Ausbildung bzw. Zusammenfassung zweier erfindungsgemäß gestalteter Ventileinrichtungen zu einer kombinierten Ventileinrichtung mit drei Anschlüssen kann diese unter einem weiteren Aspekt der Erfindung um zusätzliche Bauelemente ergänzt werden, um zusätzliche Funktionen zu erfüllen. Denkbar ist dabei beispielsweise die Integration von Einrichtungen zur Erfassung einer Zustandsgröße, insbesondere des Druckes in der Arbeitskammer zum Verbraucher. Diese ist in der Regel in Form eines Drucksensors ausgeführt. Der Vorteil besteht darin, daß durch Kopplung mit der entsprechenden Elektronik, insbesondere Anbindung bzw. . Einbeziehung in eine Steuereinrichtung eine Regelung dieser Zustandsgröße, insbesondere des Druckes möglich ist.

Eine Weiterentwicklung besteht darin, zusätzlich zum Drucksensor eine elektronische Steuereinrichtung in der kombinierten Ventileinrichtung zu integrieren. Diese Integration ermöglicht die Schaffung eines kompakten, einfach montierbaren und reparaturfreundlichen Druckregelmodules, welches als vollständig handelbare Einheit anbietbar ist.

Die erfindungsgemäße Lösung wird nachfolgend anhand von Figuren erläutert. Darin ist im einzelnen folgendes dargestellt:
- Figur 1: verdeutlicht anhand einer Schnittdarstellung eine Ausführung erfindungsgemäß gestalteter Ventileinrichtungen in einer kombinierten Ventilvorrichtung;
- Figur 2: verdeutlicht eine Ausführung gemäß Figur 1 mit Mitteln zur Erfassung einer Zustandsgröße in der Arbeitskammer der kombinierten Ventilvorrichtung;
- Figur 3: verdeutlicht eine Ausführung gemäß Figur 1 mit Integration eines elektronischen Steuergerätes.

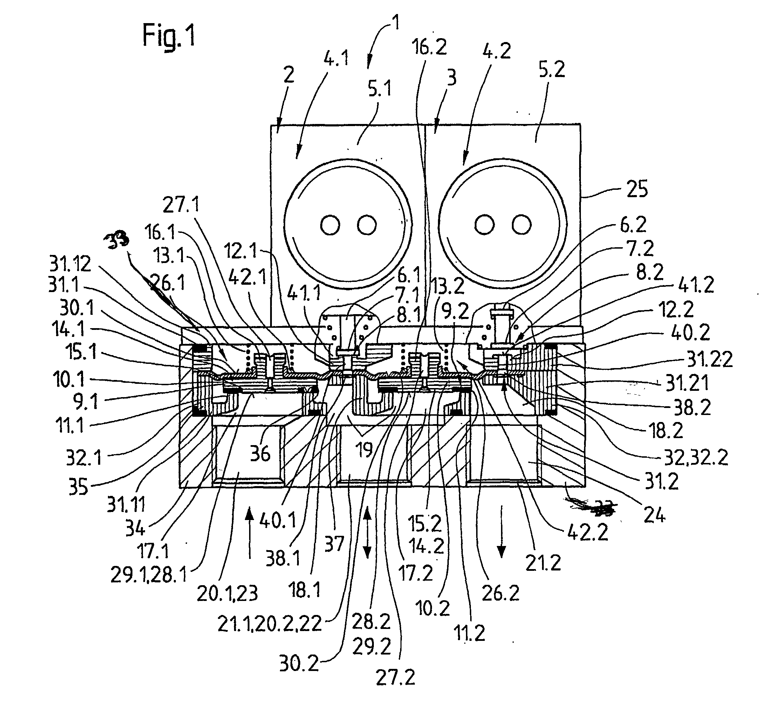

Die Figur 1 verdeutlicht anhand einer Schnittdarstellung in Form eines Axialschnittes eine vorteilhafte Ausführung einer kombinierten Ventilvorrichtung 1. Diese umfaßt zwei Ventileinrichtungen, eine erste Ventileinrichtung 2 und eine zweite Ventileinrichtung 3, wobei die erste Ventileinrichtung 2 in der kombinierten Ventilvorrichtung 1 als Einlaßventil und die zweite Ventileinrichtung 3 als Auslaßventil fungiert, zur Steuerung der Verbindung zwischen einer nicht dargestellten Druckmittelquelle und einem ebenfalls nicht dargestellten Verbraucher oder einer Verbraucheranlage sowie zur Steuerung der Druckentlastung am Verbraucher.

Beide Ventileinrichtungen - erste Ventileinrichtung 2 und zweite Ventileinrichtung 3 - sind als elektromagnetisch betätigbare Ventileinrichtungen ausgeführt. Die erste Ventileinrichtung 2, d.h. die Einlaßventileinrichtung und die zweite Ventileinrichtung 3, d.h. die Auslaßventileinrichtung, umfassen dazu jeweils Mittel 4.1 bzw. 4.2 zur elektromagnetischen Betätigung. Die Mittel 4.1 bzw. 4.2 zur elektromagnetischen Betätigung der ersten Ventileinrichtung 2 bzw, der zweiten Ventileinrichtung 3 weisen jeweils einen Betätigungsmagneten 5.1 für die Mittel 4.1 zur elektromagnetischen Betätigung und 5.2 für die Mittel 4.2 zur elektromagnetischen Betätigung und einen Anker 6.1 bzw. 6.2 auf.

Jede Ventileinrichtung - erste Ventileinrichtung 2 und zweite Ventileinrichtung 3 - umfaßt ein Vorsteuerventil, welches mit 8.1 für die erste Ventileinrichtung 2 und 8.2 für die zweite Ventileinrichtung 3 bezeichnet ist, und ein Hauptventil 9.1 bzw. 9.2. Jedes Hauptventil 9.1 und 9.2 weist wenigstens ein Hauptventilglied 10.1 bzw. 10.2 und einen ortsfesten Ventilsitz 11.1 bzw. 11.2 auf, während jedes Vorsteuerventil 8.1 und 8.2 ein Vorsteuerventilsitz 12.1 bzw. 12.2 und einen mit dem Anker 6.1 bzw. 6.2 der Betätigungsmagneten 5.1 bzw. 5.2 gekoppelten Vorsteuerventilkörper 7.1 bzw. 7.2 umfaßt. Die Hauptventilglieder 10.1, 10.2 und die Vorsteuerventilkörper 7.1 und 7.2 jeder Ventileinrichtung - erster Ventileinrichtung 2 und zweiter Ventileinrichtung 3 - sind räumlich getrennt voneinander in zwei unterschiedlichen Bauelementen angeordnet. Es besteht dabei keine Kopplung zwischen einer Bewegung des Hauptventilgliedes 10.1 bzw. 10.2 in Öffnungsrichtung des Hauptventiles 9.1 bzw. 9.2 mit der Bewegung des Vorsteuerventilkörper 7.1 bzw. 7.2 in Schließrichtung des Vorsteuerventiles 8.1 bzw. 8.2. Das Hauptventilglied 10.1 bzw. 10.2 wird dabei von einem Schließkörper 14.1 bzw. 14.2 gebildet. Der Schließkörper 14.1 bzw. 14.2 umfaßt ein Kolbenelement 15.1 bzw. 15.2, welches mit dem ortsfesten Sitz 11.1 bzw. 11.2 das Hauptventil 9.1 bzw. 9.2 bildet. Vorzugsweise ist der Schließkörper 14.1 bzw. 14.2 in axialer Richtung, d.h. in Strömungsrichtung betrachtet, mit unterschiedlichem Querschnitt ausgebildet, so daß am Kolbenelement 15.1 bzw. 15.2 noch ein Schaft 16.1 bzw. 16.2 angeordnet ist. Dabei kommt dem Schaft 16.1 bzw. 16.2 die Funktion der Fixierung der noch später beschriebenen Dichtelemente sowie der Abstützfedereinrichtung 13.1 bzw. 13.2 zu. Über diese Abstützfedereinrichtung 13.1 bzw. 13.2 stützt sich der Schließkörper 14.1 bzw. 14.2 am Gehäuse 25 der kombinierten Ventilvorrichtung 1 ab.

Jede Ventileinrichtung - erste Ventileinrichtung 2 und zweite Ventileinrichtung 3 - umfaßt eine Einlaßkammer 17.1 bzw. 17.2 und eine Auslaßkammer 18.1 bzw. 18.2, welche mit entsprechenden Anschlüssen koppelbar sind. Dabei sind die Hauptventile 9.1 und 9.2 zwischen den entsprechenden Einlaßkammern 17.1 bzw. 17.2 und den Auslaßkammern 18.1 bzw. 18.2 angeordnet. Jede der Kammern - Einlaßkammern 17.1; 17.2 und Auslaßkammern 18.1, 18.2 - ist mit Anschlüssen, hier einem ersten Anschluß 20.1 für die Einlaßkammer 17.1 und einem zweiten Anschluß 21.1 für die Auslaßkammer 18.1 der ersten Ventileinrichtung 2 sowie einem ersten Anschluß 20.2 für die Einlaßkammer 17.2 und einem zweiten Anschluß 21.2 für die Auslaßkammer 18.2 der zweiten Ventileinrichtung 3 - gekoppelt. Im dargestellten Fall der kombinierten Ventilvorrichtung 1 sind die Auslaßkammer 18.1 der ersten Ventileinrichtung 2 und die Einlaßkammer 17.2 der zweiten Ventileinrichtung 3 zusammengefaßt und bilden eine mit dem Verbraucher koppelbare Arbeitskammer 19. Neben der Zusammenführung von Einlaß 17.2 der zweiten Ventileinrichtung 3 und Auslaßkammer 18.1 der ersten Ventileinrichtung 2 sind auch die damit verbundenen Anschlüsse - zweiter Anschluß 21.1 der ersten Ventileinrichtung 2 und erster Anschluß 20.2 der zweiten Ventileinrichtung 3 zu einem Anschluß 22 zusammengefaßt. Der erste Anschluß 20.1 der ersten Ventileinrichtung 2 wird dabei von einem, mit einer Druckmittelquelle koppelbaren Zulauf 23, gebildet. Der zweite Anschluß 21.1 der ersten Ventileinrichtung 2 und damit der Anschluß 22 der kombinierten Ventilvorrichtung 1 wird von einem Anschluß zum Verbraucher gebildet. Der erste Anschluß 20.2 der zweiten Ventileinrichtung 3 wird zum Zwecke der Druckentlastung ebenfalls vom Anschluß 22 zum Verbraucher gebildet, während der zweite Anschluß 21.2 der zweiten Ventileinrichtung 3 einen Anschluß 24 zu einem Entlastungsraum darstellt. Der Begriff Anschluß ist dabei nicht nur derart zu verstehen, daß es sich hierbei bereits um ein Element einer form- und/oder kraftschlüssigen Verbindung mit entsprechenden Leitungen oder Kanälen handelt; der Begriff Anschluß dient hier lediglich der Wiedergabe der Funktion, d.h. der Bereitstellung der Möglichkeit einer Kopplung mit einer Druckmittelquelle, einem Verbraucher etc. Das Gehäuse 25 der kombinierten Ventilvorrichtung 1 weist dabei drei Anschlüsse, den Zulauf 23, welcher mit der Druckmittelquelle koppelbar ist, den Anschluß 22 zum Verbraucher, der zur Versorgung belüftet und zur Entlüftung entlüftet wird und einen Anschluß 24 zur Entlüftung, welcher auch als Anschluß zur Kopplung mit einem Entlastungsraum bezeichnet wird, auf. Denkbar ist es auch, hier im einzelnen jedoch nicht dargestellt, den zweiten Anschluß 21.1 der ersten Ventileinrichtung 2 und den ersten Anschluß 20.2 der zweiten Ventileinrichtung 3 nicht unmittelbar miteinander zu verbinden, sondern über ein, hier nicht dargestelltes Modul, welches einen Verbindungsblock für einzelne Kanäle darstellt und als Ausgang den Anschluß an den Verbraucher beinhaltet.

Jedem Vorsteuerventil 8.1, 8.2 ist eine Vorsteuerkammer 26.1 bzw. 26.2 zugeordnet. Die Vorsteuerkammer 26.1 ist dabei mit dem ersten Anschluß 20.1 der ersten Ventileinrichtung 2, d.h. dem Zulauf 23 bzw. der mit dieser gekoppelten Einlaßkammer 17.1 verbunden, während die Vorsteuerkammer 26.2 der zweiten Ventileinrichtung mit dem ersten Anschluß 20.2 der zweiten Ventileinrichtung 3, welche vom Anschluß 22 zum Verbraucher gebildet wird, bzw. der Arbeitskammer 19 gekoppelt ist. Die Kopplung erfolgt über wenigstens jeweils einen Verbindungskanal 27.1 bzw. 27.2, der sich durch den Schließkörper 14.1 bzw. 14.2 bis zur Vorsteuerkammer 26.1 bzw. 26.2 erstreckt. Die Vorsteuerkammern 26.1 und 26.2 sind dabei derart angeordnet, daß über diese ein Gegendruck zum Druck in der Einlaßkammer 17.1 am Hauptventil 9.1 bzw. der Arbeitskammer 19 am Hauptventil 9.2 der zweiten Ventileinrichtung 3 erzeugt wird. Dabei wird wenigstens ein Teilbereich 28.1 der zur Einlaßkammer 17.1 ausgerichteten Stimfläche 29.1 des Hauptventiles 9.1 mit Druck aus der Einlaßkammer 17.1 beaufschlagt, während der Druck in der Vorsteuerkammer 26.1 auf der von der Einlaßkammer 17.1 weggerichteten Stirnfläche 30.1 am ersten Schließkörper 14.1 wirkt. In Analogie gilt diese Aussage auch für die zweite Ventileinrichtung 3. Hier handelt es sich um den Teilbereich 28.2, welcher auf der zur Arbeitskammer 19 gerichteten Stimfläche 29.2 vom Druck in der Arbeitskammer 19 beaufschlagt wird, während der Druck in der Vorsteuerkammer 26.2 auf die von der Arbeitskammer 19 weggerichteten Stirnfläche 30.2 wirkt. Die Verbindung zwischen Vorsteuerkammer 26.1 und der Einlaßkammer 17.1 bzw. der Arbeitskammer 19 und der Vorsteuerkammer 26.1 erfolgt über Kanäle, vorzugsweise mindestens jeweils einen Kanal, den Verbindungskanal 27.1 am ersten Schließkörper 14.1 und 27.2 am zweiten Schließkörper 14.2. Dieser verläuft vorzugsweise parallel zum Zulauf 23 bzw. Anschluß 22 an den Verbraucher. Eine geneigte Ausführung zur Strömungsrichtung im Zulauf 23 bzw. zum Anschluß an den Verbraucher 22 ist ebenfalls denkbar, wird jedoch in der Regel nicht angestrebt. Der Kanal 27.1 bzw. 27.2 weist vorzugsweise über seine Länge einen gleichbleibenden Querschnitt auf, so daß dieser die Funktion einer Konstantdrossel zwischen der Einlaßkammer 17.1 und der Vorsteuerkammer 26.1 bzw. der Arbeitskammer 19 und der Vorsteuerkammer 26.2 übernimmt. Der Schließkörper 14.1 bzw. 14.2 wird auf seiner von der Einlaßkammer weggerichteten Stirnfläche 30.1 bzw. 30.2 neben dem Druck aus der Vorsteuerkammer 26.1 bzw. 26.2 von der Kraft einer Abstützfedereinrichtung 13.1 bzw. 13.2 beaufschlagt. Diese stützt sich am Gehäuse 25 ab. Die Abstützfedereinrichtung ist als Druckfedereinrichtung ausgeführt.

Das Vorsteuerventil 8.1 bzw. 8.2 fungiert als steuerbare Drosseleinrichtung. Diese wird dabei jeweils von den Vorsteuerventilgliedem 12.1 und 12.2 und den Vorsteuerventilkörpern 7.1, 7.2, welche jeweils mit den Ankern 6.1, 6.2 und den Betätigungsmagneten 5.1, 5.2 verbunden sind, gebildet. Im dargestellten Fall sind beide Betätigungsmagneten 5.1 bzw. 5.2 der beiden Ventileinrichtungen im unbestromten Zustand dargestellt, wobei dieser Zustand dadurch charakterisiert ist, daß die erste Ventileinrichtung 2 geschlossen ist und somit den Zulauf 23 sperrt, während die zweite Ventileinrichtung 3 geöffnet ist, so daß zwischen dem Anschluß zum Verbraucher 22 und der Atmosphäre bzw. einen Entlastungsraum 24 eine Verbindung besteht, wobei jedoch das Hauptventil 9.2 im geschlossenen Zustand wiedergegeben ist. Die weiteren Zustände sind durch die weiter unten folgende Funktionsbeschreibung erläutert.

Erfindungsgemäß sind neben der räumlichen Trennung und der Unterbringung in unterschiedlichen Baueinheiten von Konstantdrossel und steuerbaren Drossel in Form des Vorsteuerventiles 8.1 bzw. 8.2 die einzelnen Elemente - Hauptventil 9.1, 9.2 und Vorsteuerventileinrichtung 8.1, 8.2 der beiden Ventileinrichtungen - erste Ventileinrichtung 2 und zweite Ventileinrichtung 3 - jeweils mittels eines wenigstens zweiteiligen Einsatzes 31.1 bzw. 31.2 im Gehäuse 25 druckmitteldicht eingespannt. Die einzelnen Elemente jedes zweiteiligen Einsatzes 31.1 bzw. 31.2 sind dabei jeweils mit 31.11 bzw. 31.12 für den zweiteiligen Einsatz 31.1 und 31.21 bzw. 31.22 für den zweiteiligen Einsatz 31.2 bezeichnet. Die Einsätze 31.1 bzw. 31.2 sind im Gehäuse 25 integriert und derart ausgelegt und angeordnet, daß diese sich an den Innenwänden 32 des Gehäuses 25 abstützen, insbesondere am Gehäuseinnenwandbereich 32.1 sowie einem Gehäuseinnenwandbereich 32.2, welcher von einem Deckelelement 33 gebildet wird, das mit einem Gehäusegrundelement 34 das Gehäuse 25 bildet. In der ersten Ventileinrichtung 2 zur Steuerung der Verbindung zwischen einer nicht dargestellten Druckmittelquelle und einer ebenfalls nicht dargestellten Verbraucheranlage ist zwischen einer, mit der Druckmittelquelle an den Zulauf 23 sich anschließenden Einlaßkammer 17.1 und einer mit dem Verbraucher über den Anschluß 22 zum Verbraucher verbundenen Arbeitskammer 19 das Hauptventil 9.1 angeordnet. Der ortsfeste Ventilsitz 11.1 bzw. 11.2 wird dabei vom zweiteiligen Einsatz 31.1 bzw. 31.2, insbesondere dem ersten Einsatzteilelement 31.11 des ersten Einsatzes 31.1 bzw. 31.21 in der zweiten Ventileinrichtung 3 gebildet. Das erste Einsatzteilelement 31.11 des Einsatzes 31.1 der ersten Ventileinrichtung 2, welches in Strömungsrichtung vom Zulauf 23 zum Anschluß 22 zum Verbraucher vor dem zweiten Einsatzteilelement 31.12 angeordnet ist, weist dazu einen Vorsprung 35 auf, welcher mit wenigstens einer Teilfläche 36 den Ventilsitz 11.1 bildet. Der Schließkörper 14.1, der in Form des Kolbenelementes 15.1 ausgeführt ist, kann mit seiner zum Zulauf 23 gerichteten Fläche 29.1 am Ventilsitz 11.1 zum Anliegen kommen. Das Vorsteuerventilglied 12.1 bzw. 12.2 ist erfindungsgemäß im Einsatz 31.1 bzw. 31.2 integriert. Die Integration erfolgt dabei im wesentlichen im zweiten Einsatzteilelement 31.12 bzw. 31.22. Die Verbindung zur Auslaßkammer 18.1 der ersten Ventileinrichtung 2 bzw. 18.2 der zweiten Ventileinrichtung 3 erfolgt dabei jeweils über Verbindungskanäle 40.1 bzw. 40.2, die sich vom Ventilglied 12.1 bzw. 12.2, d.h. dem äußeren Umfang 41.1 bzw. 41.2 der zweiten Einsatzteilelemente 31.12 bzw. 31.22 durch wenigstens das zweite Einzelement 31.12 bzw. 31.22 in Richtung zur Auslaßkammer hin erstrecken. Da vorzugsweise der zweiteilige Einsatz derart aufgebaut ist, daß die einzelnen Einsatzteilelemente 31.11, 31.12 bzw. 31.21, 31.22 in axialer Richtung hintereinander angeordnet sind und sich aufeinander abstützen, erstreckt sich der Verbindungskanal 40.1 bzw. 40.2 nicht nur durch das zweite Einsatzteilelement 31.12 bzw. 31.22, sondern auch durch das erste Einsatzteilelement 31.11 bzw. 31.12. Bei der in der Figur 1 dargestellten kombinierten Ventilvorrichtung werden dabei aus Gründen der Platzersparnis die aneinander angrenzenden Wände der Einsatzteilelemente 31.22, 31.21 und 31.11, 31.12 zusammengefaßt. Dies bedeutet, daß eine Wand eines der beiden zweiteiligen Einsätze 31.1 oder 31.2 vom anderen Einsatz 31.2 bzw. 31.1 mitgebildet wird. Im dargestellten Fall werden die zwischen den beiden Hauptventilgliedern 9.1 und 9.2, insbesondere den beiden Schließkörpern 14.1 und 14.2 vorgesehenen Zwischenwände 37, welche von den Einsatzteilelementen der Einsätze 31.1 bzw. 31.2 gebildet werden, vom Einsatz 31.1 gebildet.

Die Vorsteuerkammer 26.1 wird dabei zwischen dem Einsatz 31.1 und dem Schließkörper 14.1, die Vorsteuerkammer 26.2 zwischen dem zweiten Einsatz 31.2 und dem Schließkörper 14.2 gebildet. Zu diesem Zweck ist zwischen dem ersten Einsatzteilelement 31.11, dem zweiten Einsatzteilelement 31.12 des ersten Einsatzes 31.1 und der vom Zulauf 23 bzw. der Einlaßkammer 17.1 weggerichteten Stimfläche 30.1 des Schließkörpers 14.1 eine Dichteinrichtung 42.1 bzw. 42.2 vorgesehen. Die Dichteinrichtung 42.1 bzw. 42.2 ist im dargestellten Fall als Membran ausgeführt und auf der Seite des Einsatzes 31.1 zwischen dem ersten und dem zweiten Einsatzteilelement 31.11 bzw. 31.12 befestigt. Es ist jedoch auch denkbar, daß die Dichteinrichtung 42.1 lediglich am zweiten Einsatzteilelement 31.12 des ersten Einsatzes 31.1 sowie der vom Zulauf 23 bzw. der Einlaßkammer 17.1 weggerichteten Stirnfläche 30.1 des Schließkörpers 14.1 befestigt wird. Die Vorsteuerkammer wird des weiteren durch die Gehäuseinnenwand 32 begrenzt, wobei eine Verbindung zwischen Vorsteuerkammer 26.1 und Vorsteuerventileinrichtung 8.1 besteht.

In Analogie gelten die Ausführungen hinsichtlich der Ausbildung der Vorsteuerkammer 26.2 und der dazu erforderlichen Dichteinrichtungen auch für die zweite Ventileinrichtung 3.

Beide Ventileinrichtungen - erste Ventileinrichtung 2 in Form des Einlaßventiles und zweite Ventileinrichtung 3 in Form des Auslaßventiles - arbeiten nach dem gleichen Prinzip, dem Düsen-Prallplatten-Prinzip. Dabei werden steuerbare Widerstände zum Einstellen von Drücken verwendet. Die Beschreibung wird vorwiegend an einem Ventil erläutert.

Die erste Ventileinrichtung 2, insbesondere das Hauptventil 9.1 ist an den Vorratsdruck für die Einlaßkammer 17.1 angeschlossen. Durch die Konstantdrossel in Form des Verbindungskanales 27.1 im Schließkörper 14.1 herrscht dieser Vorratsdruck, d.h. der Druck in der Einlaßkammer 17.1 auch in der Vorsteuerkammer 26.1. Da der Druck in der zum Verbraucher führenden Kammer, d.h. der Arbeitskammer 19, in diesem Fall kleiner oder maximal gleich dem Vorratsdruck, d.h. dem Druck in der Einlaßkammer 17.1 ist, bleibt bei geschlossenem Vorsteuerventil 8.1 das Hauptventil 9.1 der ersten Ventileinrichtung 2 ebenfalls geschlossen. Zur Erhöhung des Druckes in der zum Verbraucher führenden Kammer, d.h. der Arbeitskammer 19, wird dabei der Betätigungsmagnet 5.2 der zweiten Ventileinrichtung 3 bestromt. Dies führt zu einem Schießen des Vorsteuerventiles 8.2 der zweiten Ventileinrichtung 3, d.h. einem Schließen der steuerbaren Drosseleinrichtung. Wird der Betätigungsmagnet 5.1 der ersten Ventileinrichtung 2 bestromt, öffnet die steuerbare Drosseleinrichtung in Form der Vorsteuerventileinrichtung 8.1. Das Fluid aus der Vorsteuerkammer 26.1 strömt über das Vorsteuerventil 8.1 zur Arbeitskammer 19. Über die Konstantdrossel, d.h. den Verbindungskanal 27.1 am Schließkörper 14.1 strömt Fluid aus der Einlaßkammer 17.1 nach. Aus dem Öffnungsverhältnis der beiden Drosseln - der Konstantdrossel und der durch die Öffnung des Ventileinrichtunges 8.1 gebildeten Drossel - zueinander stellt sich in der Vorsteuerkammer 26.1 ein Vorsteuerdruck ein. Die auf die von der Einlaßkammer weggerichtete Stirnfläche 30.1 und die auf die zur Einlaßkammer gerichteten Stirnfläche 29.1 wirkenden Drücke und damit angreifenden Kräfte halten den Schließkörper 14.1 im Gleichgewicht. Wird das Vorsteuerventil 8.1 dabei zu Beginn ganz geöffnet, wird der Druck in der Vorsteuerkammer 26.1 sofort auf einen relativ kleinen Druck abgebaut. Das Kräftegleichgewicht am Schließkörper 14.1 ist gestört. Das Einlaß-Hauptventil 9.1 wird geöffnet. Das Fluid strömt aus dem Vorrat, d.h. der Einlaßkammer 17.1 direkt in die mit dem Verbraucher gekoppelte Arbeitskammer 19. In diesem Zustand strömt das Fluid von der Einlaßkammer 17.1 über das Hauptventil 9.1 und den Bypass über die Vorsteuerkammer 26.1 und das Vorsteuerventil 8.1 zum Verbraucher, d.h. der Arbeitskammer 19. Beim vollen Öffnungshub des Haupt-Einlaßventiles 9.1, d.h. des Schließkörpers 14.1, bildet dieses trotzdem einen Widerstand für den von der Einlaßkammer zum Verbraucher fließenden Fluidstrom. Unter Beachtung der Stellzeiten wird der Betätigungsmagnet 5.1 der ersten Ventileinrichtung rechtzeitig wieder stromlos geschaltet und der Durchbruch an der Vorsteuerventileinrichtung 8.1 geschlossen, was schließlich mit einem Anstieg des Vorsteuerdruckes zum Schließen des Hauptventiles 9.1 führt, so daß mit dem Schließen des Hauptventiles 9.1 der vorgesehene Verbraucherdruck in der Arbeitskammer 19 erreicht wird. Zum Halten des Verbraucherdruckes wird der Betätigungsmagnet 5.2 der zweiten Ventileinrichtung 3 bestromt und der Betätigungsmagnet der ersten Ventileinrichtung 2 bleibt unbestromt.

Wird die Stellung der Vorsteuerventileinrichtung 8.1 bzw. 8.2 mit einem Betätigungsmagneten 5.1 bzw. 5.2 in Form eines Proportionalmagneten eingestellt, kann der Öffnungsquerschnitt der Vorsteuerventileinrichtung 8.1 bzw. 8.2 stetig verändert werden. Dieser bildet quasi eine steuerbare Drosseleinrichtung. Die steuerbare Drossel kann jedoch ersatzweise auch über ein getaktetes Magnetventil ersetzt werden. Dabei besitzt das Fluidvolumen in der Vorsteuerkammer 26.1 eine dämpfende Wirkung. Mit veränderbarem Taktverhältnis ist der Druck in der Vorsteuerkammer 26.1 auf Werte zwischen dem Eingangs- und Ausgangsdruck einstellbar.

. Das Absenken des Druckes im Zulauf 22 zum Verbraucher erfolgt in ähnlicher Weise mit der zweiten Ventileinrichtung 3, insbesondere über die Betätigung des Betätigungsmagneten 5.2. Der Betätigungsmagnet 5.1 der ersten Ventileinrichtung 2 bleibt während dieser Phase unbestromt. Durch das Absenken der Bestromung am Betätigungsmagneten 5.2 der zweiten Ventileinrichtung 3 wird das Vorsteuerventil 8.2, insbesondere die steuerbare Drossel geöffnet und der Druck aus der Vorsteuerkammer 26.2 der zweiten Ventileinrichtung 3 reduziert. Das Hauptventil 9.2 öffnet und läßt Fluid vom Verbraucher in die Atmosphäre. Wird die zweite Ventileinrichtung 3 getaktet, bestimmt der Schaltzyklus und das Taktverhältnis den Druck in der Vorsteuerkammer 26.2.

Die an den Schließkörpern 14.1 bzw. 14.2 wirksame druckbeaufschlagten Flächen bewirken in Verbindung mit der Lage und Breite der Steuerbereiche der Vorsteuerventileinrichtung 8.1 bzw. 8.2, daß in Teilbereichen eine Druckänderung in der Kammer zum Verbraucher, d.h. in der Arbeitskammer 19 nur über die Drossel 8.1 bzw. 8.2 erzielt wird. Dies ermöglicht eine feinfühlige Anpassung in den Grenzbereichen.

Bei der in der Figur 1 dargestellten Ventilkombination 1 handelt es sich um eine funktionale Zusammenfassung zweier erfindungsgemäß gestalteter Ventileinrichtungen 2 und 3. Die einzelnen Ventileinrichtungen 2 und 3 sind dabei vorzugsweise entsprechend der Anordnung und Ausgestaltung der einzelnen Ventile - Hauptventil und Vorsteuerventil - gleich aufgebaut und ausgelegt. Durch die Kombination besteht jedoch die Möglichkeit, daß auf zumindest ein separates Einsatzteilelement bzw. eine entsprechende Ausbildung eines Einsatzteilelementes sowie die Verbindungsleitungen zwischen beiden Ventileinrichtungen verzichtet werden kann, indem gemeinsam genutzte Zwischenwände von jeweils nur einem Einsatzteilelement bzw. einem Einsatz gebildet werden. Bei dieser besonders bevorzugten Ausführung durch Kombination der beiden Ventileinrichtungen 2 und 3 kann bei der Ausgestaltung der Einsätze auf eine separate Zwischenwand zwischen den beiden Ventileinrichtungen verzichtet werden. Diesbezüglich bestehen eine Vielzahl von Möglichkeiten. Eine ist stellvertretend in der Figur 1 verdeutlicht. Diese bietet den Vorteil, daß die Dichteinrichtung 42 gleichzeitig als durchgängige Dichteinrichtung in Form einer Membran für die Ausbildung der zweiten Vorsteuerkammer 26.2 der zweiten Ventileinrichtung 3 genutzt werden kann. Der Übertritt des Fluids von den als steuerbare Drosseln ausgeführten Vorsteuerventilen 8.1 oder 8.2 zum entsprechenden Auslaß, d.h. für die Ventileinrichtung 2 zur Arbeitskammer 19 und für die Ventileinrichtung 3 zu einem Entlüftungsanschluß 24 bzw. einer Entlüftungskammer erfolgt dabei über Durchgangsöffnungen 38 in der Dichteinrichtung 42.1 bzw. 42.2.

Des weiteren besteht die Möglichkeit, hinsichtlich ihrer Funktionsweise die erste Ventileinrichtung oder die zweite Ventileinrichtung mit anderen Ventileinrichtungen mit der gleichen Funktionsweise zu kombinieren.

Entscheidend ist lediglich, daß der Aufbau von erster Ventileinrichtung oder zweiten Ventileinrichtung derart erfolgt, daß eine einfache Reparatur bzw. ein einfacher Austausch einzelner Elemente möglich ist, ohne daß andere Anschlußelemente beschädigt werden.

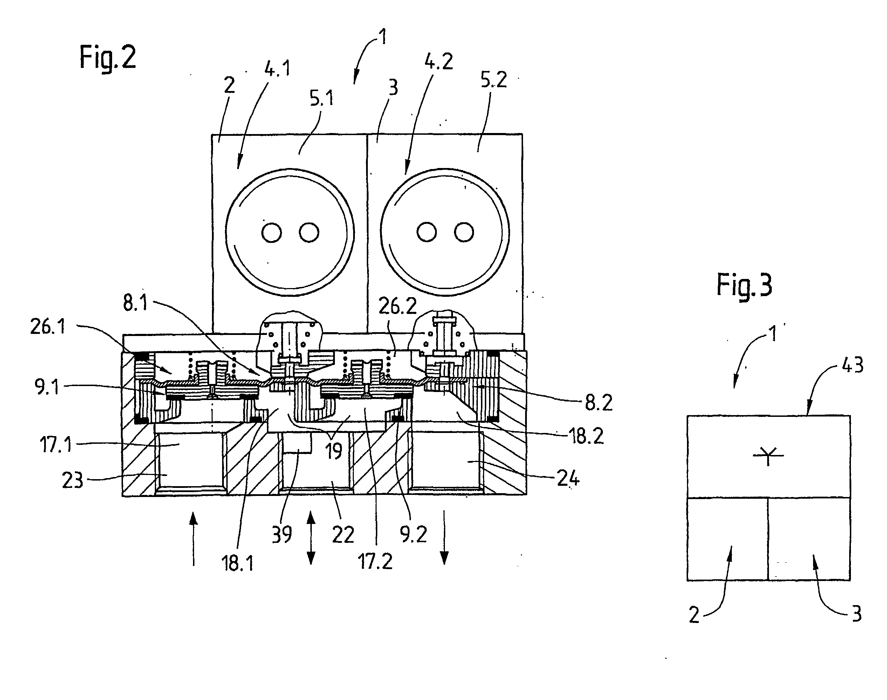

Unter einem weiteren Aspekt der Erfindung besteht gemäß Figur 2 die Möglichkeit, bei der in der Figur 1 dargestellten Ventilkombination 1 eine Einrichtung 39 zur Erfassung des Druckes in der Arbeitskammer 19 vorzusehen. Dies bietet die Möglichkeit, eine Ventilvorrichtung 1 als selbständig handelbare Baueinheit anzubieten, welche in Regelung des Druckes am Verbraucher ohne zusätzlichen Mehraufwand vorsehbar ist.

In einer Weiterentwicklung der Vorrichtung 1 gemäß Figur 2 besteht auch die Möglichkeit, ein elektronisches Steuergerät 43 in der Ventilvorrichtung 1 zu integrieren. Damit wird ein weitesgehenst vom Vorsehen zusätzlicher Elemente unabhängiges Druckregelmodul geschaffen.

### Bezugszeichenliste

- 1: kombinierte Ventilvorrichtung
- 2: erste Ventileinrichtung
- 3: zweite Ventileinrichtung
- 4.1, 4.2: Mittel zur elektromagnetischen Betätigung
- 5.1, 5.2: Betätigungsmagnet
- 6.1, 6.2: Anker
- 7.1, 7.2: Vorsteuerventilkörper
- 8.1, 8.2: Vorsteuerventil
- 9.1, 9.2: Hauptventil
- 10.1, 10.2: Hauptventilglied
- 11.1: ortsfester Sitz des Hauptventiles 9.1
- 11.2: ortsfester Sitz des Hauptventiles 9.2
- 12.1, 12.2: Vorsteuerventilsitz
- 13.1, 13.2: Abstützfedereinrichtung
- 14.1, 14.2: Schließkörper
- 15.1, 15.2: Kolbenelement
- 16.1, 16.2: Schaft
- 17.1: Einlaßkammer der ersten Ventileinrichtung 2
- 17.2: Einlaßkammer der zweiten Ventileinrichtung 3
- 18.1: Auslaßkammer der ersten Ventileinrichtung 2
- 18.2: Auslaßkammer der zweiten Ventileinrichtung 3
- 19: Arbeitskammer
- 20.1: erster Anschluß der ersten Ventileinrichtung 2
- 20.2: ersten Anschluß der zweiten Ventileinrichtung 3
- 21.1: zweiter Anschluß der ersten Ventileinrichtung 2
- 21.2: zweiter Anschluß der zweiten Ventileinrichtung 3
- 22: Anschluß zum Verbraucher
- 23: Zulauf
- 24: Anschluß zum Entlastungsraum
- 25: Gehäuse
- 26.1, 26.2: Vorsteuerkammer
- 27.1, 27.2: Verbindungskanal
- 28.1, 28.2: Teilbereich der zur Einlaßkammer ausgerichteten Stimfläche
- 29.1: zur Einlaßkammer 17.1 ausgerichtete Stirnfläche
- 29.2: zur Einlaßkammer 17.2 ausgerichtete Stirnfläche
- 30.1: von der Einlaßkammer 17.1-weggerichtete Stimfläche des Schließkörpers 14.1
- 30.2: von der Auslaßkammer weggerichtete Stirnfläche des Schließkörpers 14.2
- 31.1, 31.2: zweiteiliger Einsatz
- 31.11: erstes Einsatzteilelement des ersten Einsatzes
- 31.12: zweites Einsatzteilelement des ersten Einsatzes
- 31.21 erstes: Einsatzteilelement des zweiten Einsatzes
- 31.22: zweites Einsatzteilelement des zweiten Einsatzes
- 33: Deckelelement
- 34: Gehäusegrundelement
- 35: Vorsprung
- 36: Teilfläche
- 37: Zwischenwand
- 38.1, 38.2: Durchgangsöffnung
- 39: Einrichtung zur Erfassung des Druckes in der Arbeitskammer
- 40.1, 40.2: Verbindungskanal
- 41.1, 41.2: äußerer Umfang
- 42.1, 42.2: Dichteinrichtung
- 43: Steuergerät

## Patentansprüche

1. Ventileinrichtung (2, 3), insbesondere elektromagnetisch betätigbare Ventiteinrichtung (2, 3);
1.1 mit einem Gehäuse (25);
1.2 mit einer Betätigungsvorrichtung (4.1, 4.2);
1.3 mit einem, zwischen einer Einfaßkammer (17.1, 17.2) und einer Auslaßkammer (18.1, 18.2) angeordneten Hauptventil (9.1, 9.2), umfassend ein Hauptventilglied (10.1, 10.2) und einen ortsfesten Ventilsitz (11.1, 11.2);
1.4 mit einer Vorsteuerkammer (26.1, 26.2);
1.5 die Vorsteuerkammer (26.1, 26.2) ist über ein Vorsteuerventil (8.1, 8.2), umfassend mindestens ein Vorsteuerventilsitz (12.1, 12.2) und einen mit der elektromagnetischen Betätigungsvorrichtung (4.1, 4.2) verbundenen Ventilkörper (7.1, 7.2), mit der Auslaßkammer (17.2) und über mindestens einen Verbindungskanal (27.1, 27.2) mit während des Betriebes nicht veränderbarem Kanalquerschnitt mit der Einlaßkammer (17.1, 17.2) verbunden;
1.6 die Vorsteuerkammer (26.1, 26.2) ist dem Hauptventilglied (10.1, 10.2) derart zugeordnet, daß das Hauptventilglied (10.1, 10.2) wenigstens in einem Teilbereich seiner in Strömungsrichtung des Druckmittels betrachtet einander entgegengesetzt ausgerichteten Flächen (29.1. 29.2, 30.1, 30.2) jeweils vom in der Einlaßkammer (17.1, 17.2) vorherrschenden Druck und dem in der Vorsteuerkammer (26.1, 26.2) vorherrschenden Druck beaufschlagt wird;
1.7 die Vorsteuerkammer (26.1, 26.2) ist über wenigstens einen, sich durch das das Hauptventilglied bildende Baulement erstreckenden Verbindungskanal (27.1, 27.2) mit der Einlaßkammer (17.1, 17.2) verbunden;
1.8 das Hauptventilglied bildende Bauelement und das Vorsteuerventilsitz (12.1; 12.2) sind frei von einer baulichen Kopplung miteinander, **gekennzeichnet durch** die folgenden Merkmale:
1.9 das Gehäuse weist ein Gehäusegrundelement (34) und ein Deckelelement (33) auf, in dessen Innenwandbereichen (32.1, 32.2) ein mehrteiliger Einsatz (31.1, 31.2), umfassend mindestens ein erstes Einsatzteiletement (31.11, 31.21) und ein zweites Einsatzteilelement (31.12, 31.22) abgestützt sind; wobei
1.10 in Strömungsrichtung des Druckmittels von der Eintaßkammer (17.1, 17.2) aus betrachtet das zweite Einsatzteilelement (31.12, 31.22) dem ersten Einsatzteilelement (31.11, 31.21) nachgeordnet ist; und
1.11 der ortsfeste Sitz (11.1, 11.2) des Hauptventils (9.1, 9.2) am ersten Einsatzteilelement (31.11, 31.21) ausgebildet ist; und
1.12 das Vorsteuerventilsitz (12.1, 12.2) im zweiten Einsatzteileiement (31.12, 31.22) integriert ist; wobei
1.13 die Verbindung zwischen dem Vorsteuerventil (8.1, 8.2) und der . Auslaßkammer (18.1., 18.2) über mindestens einen im Einsatz (31.1, 31.2) angeordneten Verbindungskanal (40.1, 40.2) erfolgt.

2. Ventileinrichtung (2, 3) nach Anspruch 1, **dadurch gekennzeichnet, daß** das Bauelement zur Bildung des Hauptventilgliedes (10.1, 10.2) von einem schließkörper (14.1, 14.2) gebildet wird, umfassend einen kolbenartigen Endbereich (15.1, 15.2) und einen an diesen anschließenden Schaft (16.1, 16.2).

3. Ventileinrichtung (2, 3) nach einem der Ansprüche 1 oder 2, **dadurch gekennzeichnet, daß** an den miteinander in Wirkverbindung tretenden Flächenbereichen von Hauptventilglied (10.1, 10.2) oder Hauptventilsitz (11.1, 11.2) und/oder Vorsteuerventilsitz (12.1, 12.2) oder Vorsteuerventilkörper (7.1, 7.2) Dichteinrichtungen vorgesehen sind.

4. Ventileinrichtung (2, 3) nach Anspruch 1, **dadurch gekennzeichnet, daß** das erste Einsatzteilelement (31.11, 31.21) einen ersten sich in axialer Richtung erstreckenden Bereich, welcher an der Gehäuseinnenwand (35) zum Anliegen kommt und einen zweiten, sich in die Einlaßkammer (17.1, 17.2) erstreckenden Bereich (38) aufweist, der den Hauptventilsitz (11.1, 11.2) bildet

5. Ventileinrichtung (2, 3) nach Anspruch 2 **dadurch gekennzeichnet, daß** die Vorsteuerkammer (26.1, 26.2) von einem zwischen Schließkörper (14.1,14.2) und dem Einsatz (31.1, 31.2) vorhandenen Zwischenraum, welcher durch das Vorsehen einer Dichteinrichtung (42) zwischen Schließkörper (14.1, 14.2) und dem Einsatz (31.1, 31.2) begrenzt wird, gebildet wird.

6. Ventileinrichtung (2, 3) nach Anspruch 5, **gekennzeichnet durch** die folgenden Merkmale:
6.1 die Vorsteuerkammer (26.1, 26.2) wird vom zweiten Einsatzteilelement (31.12, 31.22) des Einsatzes (31.1, 31.2) und dem Schließkörper (14.1, 14.2) begrenzt;
6.2 die Dichteinrichtung (42) ist zwischen dem zweiten Einsatzteilelement (31.12, 31.22) und dem Schließkörper (14.1, 14.2) angeordnet

7. Ventileinrichtung (2, 3) nach Anspruch 6, **dadurch gekennzeichnet, daß** die Dichteinrichtung (42.1, 42.2) als Membran ausgeführt ist, welche an der von der Einlaßkammer (17.1, 17.2) weggerichteten Stirnfläche (30.1, 30.2) des Hauptventilgliedes (10.9, 10.2) befestigt ist und an einem der beiden Einsatzteilelemente (31.11, 31.12, 31.21, 31.22) oder zwischen erstem (31.11, 31.12) und zweitem Einsatzteilelement (31.21, 31.22) eingespannt ist.

8. Ventileinrichtung (2, 3) nach einem der Ansprüche 1 bis 7, **dadurch gekennzeichnet, daß** die Vorsteuerkammer (26.1, 26.2) direkt an das Vorsteuerventil (8.1, 8.2) grenzt.

9. Ventileinrichtung (2, 3) nach einem der Ansprüche 1 bis 8, **dadurch gekennzeichnet, daß** die Betätigungseinrichtung (4.1, 4.2) mindestens einen Betätigungsmagneten (5.1, 5.2) und einen, mit diesem gekoppelten Anker (6.1, 6.2) umfaßt

10. Ventileinrichtung (2, 3) nach Anspruch 8, **dadurch gekennzeichnet, daß** der Betätigungsmagnet (5.1, 5.2) eine ansteigende Hub/Stromcharakteristik aufweist, also ziehend ist

11. Ventileinrichtung (2, 3) nach Anspruch 10, **dadurch gekennzeichnet daß** der Betätigungsmagnet (5.1, 5.2) eine abfallende Hub-/Stromcharakteristik aufweist, also drückend ist

12. Ventileinrichtung (2, 3) nach einem der Ansprüche 1 bis 11, **dadurch gekennzeichnet, daß** zwischen dem Einsatz (31.1, 31.2) und den Gehäusewänden (32) jeweils eine Dichteinrichung vorgesehen ist

13. Ventileinrichtung (2, 3) nach einem der Ansprüche 1 bis 12, **dadurch gekennzeichnet, daß** die Einlaßkammer (17.1) mit einer Druckmittelquelle verbindbar ist und die Auslaßkammer (18.1) eine Arbeitskammer (19) bildet, weiche mit einem Verbraucher koppelbar ist

14. Ventileinrichtung (2, 3) nach einem der Ansprüche 1 bis 13, **dadurch gekennzeichnet, daß** die Einlaßkammer (17.2) von einer Arbeitskammer (19), die mit einem Verbraucher koppelbar ist, gebildet wird und die Auslaßkammer (18.2) mit einem Entlastungsraum verbindbar ist

15. Kombinierte Ventilvorrichtung (1)
15.1 mit einer ersten Ventileinrichtung (2), insbesondere elektromagnetisch betätigbaren Ventileinrichtung (2) gemäß Anspruch 13;
15. mit einer zweiten Ventileinrichtung (3), insbesondere elektromagnetisch betätigbaren Ventileinrichtung (3) gemäß Anspruch 14.

16. Kombinierte Ventilvorrichtung (1) nach Anspruch 15, **gekennzeichnet durch** die folgenden Merkmale:
16.1 mit mindestens drei, mit den Kammern (17.1, 17.2, 18.1, 18.2) der Ventileinrichtungen (2, 3) gekoppelten Anschlüssen (23, 22, 24);
16.2 die Einlaßkammer (17.1) der ersten Ventileinrichtung (2) ist mit einer Dnrckmütelquelle koppelbar,
16.3 die Auslaßkammer (18.1) der ersten Ventileinrichtung (2) und die Einlaßkammer (17.2) der zweiten Ventileinrichtung (3) sind mit mindestens einem Verbraucher koppelbar;
16.4 die Auslaßkammer (18.2) der zweiten Ventileinrichtung (3) wird von einer Enfdastungskammer gebildet, welche mit einem Entlastungsraum gekoppelt ist.

17. Kombinierte Ventilvorrichtung (1) nach Anspruch 16, **dadurch gekennzeichnet, daß** die Einlaßkammer (17.2) der zweiten Ventileinrichtung (3) und die Auslaßkammer (18.1) der ersten Ventileinrichtung (2) von einer Arbeitskammer (19) gebildet werden, welche beiden Ventileinrichtungen (2, 3) zugeordnet ist und die über mindestens einen Anschluß (22) mit einem oder mehreren Verbrauchern koppelbar ist.

18. Kombinierte Ventilvorrichtung (1) nach Anspruch 17, **dadurch gekennzeichnet, daß** die Anschlüsse (22) zum Verbraucher in einem Block zusammengefaßt sind.

19. Kombinierte Ventilvorrichtüng (1) nach einem der Ansprüche 15 bis 18, **dadurch gekennzeichnet, daß** die Betätigungsvorrichtung (4.1, 4.2) und die Schließkörper (14-1, 14.2) der beiden Ventileinrichtungen (2, 3) identisch aufgebaut und dimensioniert sind.

20. Kombinierte Ventilvorrichtung (1) nach einem der Ansprüche 15 bis 19, **dadurch gekennzeichnet, daß** die Einsatzteilelemente (31.11, 31.12, 31.21, 31.22) der beiden Ventileinrichtungen (2, 3) derart aufgebaut und ausgelegt sind, daß diese sich gegeneinander abstützen.

21. Kombinierte Ventilvorrichtung (1) nach einem der Ansprüche 15 bis 20, **dadurch gekennzeichnet, daß** die Zwischenwand (37) zwischen beiden Ventileinrichtungen (2, 3) jeweils von einem der Einsatzteilelemente (31.11, 31.12, 31.21, 31.22) der beiden Ventileinrichtungen (2, 3) gebildet wird.

22. Kombinierte Ventilvorrichtung (1) nach einem der Ansprüche 15 bis 21, **dadurch gekennzeichnet, daß** beide Ventileinrichtungen (2, 3) eine gemeinsame Membran zur Begenzung der Vorsteuerkammem (26.1, 26.2) zwischen den Schließkörpem (14.1, 14.2) und den Einsätzen (31.1, 31.2) aufweisen.

23. Kombinierte Ventilvorrichtung (1) nach einem der Ansprüche 15 bis 22, **dadurch gekennzeichnet, daß** in der Arbeitskammer (19) eine Einrichtung (39) zur Erfassung des Druckes angeordnet ist

24. Kombinierte Ventilvorrichtung (1) nach einem der Ansprüche 15 bis 23, **dadurch gekennzeichnet, daß** diese mit einem Steuergerät (43) eine bauliche Einheit bildet.

## Claims

1. Valve system (2; 3), specifically e lectromagnetically a ctuated valve system (2; 3);
1.1 comprising a housing (25);
1.2 an actuator means (4.1; 4.2);
1.3 a principal valve (9.1; 9.2) disposed between an admission chamber (17.1; 17.2) and an discharge chamber (18.1; 18.2) and including a principal valve member (10.1; 10.2) and a stationary valve seat (11.1; 11.2);
1.4 a pilot control chamber (26.1; 26.2);
1.5 said pilot control chamber (26.1; 26.2) is connected, via pilot control valve (8.1; 8.2) including at least pilot valve seat (12.1; 12.2) and a valve body (7.1; 7.2) connected to said electromagnetic actuator device (4.1; 4.2), to said discharge chamber (17.2) and, via at least one connecting passage (27.1; 27.2) with a passage cross-section not variable during operation, to said admission chamber (17.1; 17.2);
1.6 said pilot control chamber (26.1; 26.2) is associated with said principal valve member (10.1; 10.2) in such a manner that, seen at least in one partial section of its surfaces (29,.1; 29.2; 30.1; 30.2) oriented in opposite directions along the flow direction of the pressurised medium, said principal valve m ember (10.1; 1 0.2) is subjected to the pressure prevailing in said admission chamber (17.1; 17.2) and to the pressure prevailing in said pilot control chamber (26.1; 26.2);
1.7 said pilot control chamber (26.1; 26.2) is connected to said admission chamber (17.1; 17.2) via at least one connecting passage (27.1; 27.2) extending through the structural element constituting said principal valve member;
1.8 said structural member constituting said principal valve member and said pilot control seat (12.1; 12.2) are free of any structural coupling to each other;
**characterised by** the following features:
1.9 said housing comprises a basic housing element (34) and a cover element (33) having inner wall regions (32.1; 32.2) in which a multi-part insert (31.1; 31.2) including at least one first insert sub-element (31.11; 31.21) and a second insert sub-element (31.12; 31.22) is supported, wherein
1.10 seen along the flow direction of the pressurised medium from said admission chamber (17.1; 17.2), said second insert sub-element (31.12; 31.22) is disposed downstream of said first insert sub-element (31.11; 31.21); and
1.11 said stationary seat (11.1; 11.2) of said principal valve (9.1; 9.2) is configured on said first insert sub-element (31.11; 31.21); and
1.12 said pilot control valve seat (12.1; 12.2) is integrated in said second insert sub-element (31.12; 31.22; with
1.13 the connection between said pilot control valve (8.1; 8.2) and said discharge chamber (18.1; 18.2) being established via at least one connecting passage (40.1; 40.2) disposed in said insert (31.1; 31.2).

2. Valve system (2, 3) according to Claim 1, **characterised in that** said structural element constituting said principal valve member (10.1; 10.2) is formed by a closing body (14.1; 14.2) including a piston-type terminal section (15.1; 15.2) and a shaft (16.1; 16.2) joining said section.

3. Valve system (2, 3) according to any of the Claims 1 or 2, **characterised in that** sealing means are provided on the surface areas on said principal valve member (10.2; 10.2) or said principal valve seat (11.1; 11.2) and/or said pilot control seat (12.1; 12.2) or said pilot control valve body (7.1; 7.2), which enter into an operative connection.

4. Valve system (2, 3) according to Claim 1, **characterised in that** said first insert sub-element (3.11; 31.21) comprises a first region extending along the axial d irection, w hich is caused to bear against the inner housing wall (5), and a second region (38) extending into said admission chamber (17.1; 17.2), which constitutes said principal valve seat (11.1; 11.2).

5. Valve system (2, 3) according to Claim 2, **characterised in that** said pilot control chamber (26.1; 26.2) is constituted by an intermediate space present between said closing body (14.1; 14.2) and said insert (31.1; 31.2), which space is defined by the provision of a sealing means (42) between said closing body (14.1; 14.2) and said insert (31.1; 31.2).

6. Valve system (2, 3) according to Claim 5, **characterised by** the following features:
6.1 said pilot control chamber (26.1; 26.2) is defined by said second insert sub-element (31.12; 31.22) of said insert (31.1; 31.2) and said closing body (14.1; 14.2);
6.2 said sealing means (42) is disposed between said second insert sub-element (31.12; 31.22) and said closing body (14.1; 14.2).

7. Valve system (2, 3) according to Claim 6, **characterised in that** said sealing means (42.1; 42.2) is configured in the form of a membrane fastened on the face (30.1; 30.2) of said principal valve member (10.1; 10.2), which is turned away from said admission chamber (17.1; 17.2) and clamped on one of said two insert sub-elements (31.11; 31.12; 31.21; 31.22) or between said first (31.11; 31.12) and second insert sub-elements (31.21; 31.22).

8. Valve system (2, 3) according to any of the Claims 1 to 7, **characterised in that** said pilot control chamber (26.1; 26.2) joins said pilot control valve (8.1; 8.2) directly.

9. Valve system (2, 3) according to any of the Claims 1 to 8, **characterised in that** said actuator means (4.1; 4.2) comprises at least one actuating solenoid (5.1; 5.2) and one armature (6.1; 6.2).

10. Valve system (2, 3) according to Claim 8, **characterised in that** said actuating solenoid (5.1; 5.2) comprises a rising travel/current characteristic, which means that it is drawing.

11. Valve system (2, 3) according to Claim 10, **characterised in that** said actuating solenoid (5.1; 5.2) comprises a declining travel/current characteristic, which means that it is pressing.

12. Valve system (2, 3) according to any of the Claims 1 to 11, **characterised in that** a respective sealing means is provided between said insert (31.1; 31.2) and the housing walls (32).

13. Valve system (2, 3) according to any of the Claims 1 to 12, **characterised in that** said admission chamber (17.1) is adapted to be connected to a source of pressurised medium and that said discharge chamber (18.1) constitutes a working chamber (19) that is adapted to be coupled to a load.

14. Valve system (2, 3) according to any of the Claims 1 to 13, **characterised in that** said admission chamber (17.2) is formed by a working chamber (19) adapted to be coupled to a load, and that said discharge chamber (18.2) is adapted to be connected to a relief space.

15. Combined valve device (1) comprising
15.1 a first valve system (2), in particular an electromagnetically actuated valve system according to Claim 13;
15.2 a second valve system (3), in particular an electromagnetically actuated valve system (3) according to Claim 14.

16. Combined valve device (1) according to Claim 15, **characterised by** the following features:
16.1 at least three ports (23, 22, 24) coupled to said chambers (17.1; 17.2; 18.1; 18.2) of said valve systems (2, 3);
16.2 said admission chamber (17.1) of said first valve system (2) is adapted to be coupled to a source of pressurised medium;
16.3 said discharge chamber (18.1) of said first valve system (2) and said admission chamber (17.2) of said second valve system (3) are adapted to be connected to at least one load;
16.4 said discharge chamber (18.2) of said second valve system (3) is constituted by a relief chamber coupled to a relief space.

17. Combined valve device (1) according to Claim 16, **characterised in that** said admission chamber (17.2) of said second valve system (3) and said discharge chamber (18.1) of said first valve system (2) are constituted by a working chamber (19) that is associated with both valve systems (2, 3) and that is adapted to be coupled to one or several loads via a port (22).

18. Combined valve device (1) according to Claim 17, **characterised in that** said ports (22) leading to a load are combined in a single block.

19. Combined valve device (1) according to any of the Claims 15 to 18, **characterised in that** said actuator means (14.1; 14.2) and said closing body (14.1; 14.2) of said two valve systems (2, 3) present an identical structure and identical dimensions.

20. Combined valve device (1) according to any of the Claims 15 to 19, **characterised in that** said insert sub-elements (31.11; 31.12; 31.21; 31.22) of said two valve systems (2, 3) are structured and designed for supporting each other.

21. Combined valve device (1) according to any of the Claims 15 to 20, **characterised in that** the partitioning wall (37) between both valve systems (2, 3) is formed respectively by one of said insert sub-elements (31.11; 31.21; 31.21; 31.22) of said two valve systems (2, 3).

22. Combined valve device (1) according to any of the Claims 15 to 21, **characterised in that** both valve systems (2, 3) present a common membrane for defining said pilot control chambers (26.1; 26.2) between said closing bodies (14.1; 14.2) and said inserts (31.1; 31.2).

23. Combined valve device (1) according to any of the Claims 15 to 22, **characterised in that** a means (39) is disposed in said working chamber (19) for detecting the pressure.

24. Combined valve device (1) according to any of the Claims 15 to 23, **characterised in that** it forms one structural unit together with a controller (43).

## Revendications

1. Ensemble (2, 3) de soupape, notamment ensemble (2.3) de soupape à commande électromagnétique ;
1.1 comportant un boîtier (25) ;
1.2 comportant un dispositif (4.1, 4.2) d'actionnement ;
1.3 comportant une soupape (9.1, 9.2) principale, disposée entre une chambre (17.1, 17.2) d'admission et une chambre (18.1, 18.2) d'évacuation et comprenant un obturateur (10.1, 10.2) de soupape principale et un siège (11.1, 11.2) de soupape à poste fixe ;
1.4 comportant une chambre (26.1, 26.2) de pilotage ;
1.5 la chambre (26.1, 26.2) de pilotage étant reliée à la chambre (18.1, 18.2) d'évacuation par l'intermédiaire d'une soupape (8.1, 8.2) de pilotage comprenant au moins un siège (12.1, 12.2) de soupape de pilotage et un corps (7.1, 7.2) de soupape relié au dispositif (4.1, 4.2) d'actionnement électromagnétique, et à la chambre (17.1, 17.2) d'admission par l'intermédiaire d'au moins un canal (27.1, 27.2) de liaison de section de canal non modifiable pendant le fonctionnement ;
1.6 la chambre (26.1, 26.2) de pilotage étant associée à l'obturateur (10.1, 10.2) de soupape principale de telle sorte que l'obturateur (10.1, 10.2) de soupape principale est respectivement sollicité, au moins dans une région partielle de ses surfaces (29.1, 29.2, 30.1, 30.2) mutuellement opposées considérées dans la direction d'écoulement du fluide sous pression, par la pression régnant dans la chambre (17.1, 17.2) d'admission et par la pression régnant dans la chambre (26.1, 26.2) de pilotage ;
1.7 la chambre (26.1, 26.2) de pilotage étant reliée à la chambre (17.1, 17.2) d'admission par l'intermédiaire d'au moins un canal (27.1, 27.2) de liaison s'étendant à travers l'élément constituant l'obturateur de soupape principale ;
1.8 l'élément constituant l'obturateur de soupape principale et le siège (12.1 ; 12.2) de soupape de pilotage étant dépourvus d'accouplement structurel mutuel
**caractérisé par** les caractéristiques suivantes :
1.9 le boîtier comporte un élément (34) de base de boîtier et un élément (33) de couvercle, dans les régions (32.1, 32.2) de paroi intérieure desquels est soutenue une pièce (31.1, 31.2) d'insertion en plusieurs parties, comprenant au moins un premier élément (31.11, 31.21) partiel de pièce d'insertion et un deuxième élément (31.12, 31.22) partiel de pièce d'insertion ;
1.10 le deuxième élément (31.12, 31.22) partiel de pièce d'insertion étant disposé, considéré dans la direction d'écoulement du fluide sous pression à partir de la chambre (17.1, 17.2) d'admission, après le premier élément (31.11, 31.21) partiel de pièce d'insertion ; et
1.11 le siège (11.1, 11.2) de soupape à poste fixe de la soupape (9.1, 9.2) principale étant formé sur le premier élément (31.11, 31.21) partiel de pièce d'insertion ; et
1.12 le siège (12.1, 12.2) de soupape de pilotage étant intégré dans le deuxième élément (31.12, 31.22) partiel de pièce d'insertion ;
1.13 la liaison entre la soupape (8.1, 8.2) de pilotage et la chambre (18.1, 18.2) d'évacuation s'effectuant par l'intermédiaire d'au moins un canal (40.1, 40.2) de liaison disposé dans la pièce (31.1, 31.2) d'insertion.

2. Ensemble (2, 3) de soupape suivant la revendication 1, **caractérisé en ce que** l'élément destiné à former l'obturateur (10.1, 10.2) de soupape principale est formé par un obturateur (14.1, 14.2) comprenant une région (15.1, 15.2) terminale du genre piston et une tige (16.1, 16.2) se raccordant à cette région.

3. Ensemble (2, 3) de soupape suivant la revendication 1 ou 2, **caractérisé en ce que** des moyens d'étanchéité sont prévus sur les régions de surface, entrant en liaison fonctionnelle mutuelle, de l'obturateur (10.1, 10.2) de soupape principale ou du siège (11.1, 11.2) de soupape principale et/ou du siège (12.1, 12.2) de soupape de pilotage ou du corps (7.1, 7.2) de soupape de pilotage.

4. Ensemble (2, 3) de soupape suivant la revendication 1, **caractérisé en ce que** le premier élément (31.11, 31.21) partiel de pièce d'insertion comporte une première région s'étendant en direction axiale, qui vient s'appliquer contre la paroi (35) intérieure du boîtier, et une deuxième région (38) qui s'étend dans la chambre (17.1, 17.2) d'admission et forme le siège (11.1, 11.2) de soupape principale.

5. Ensemble (2, 3) de soupape suivant la revendication 2, **caractérisé en ce que** la chambre (26.1, 26.2) de pilotage est formée par un espace intermédiaire présent entre l'obturateur (14.1, 14.2) et la pièce (31.1, 31.2) d'insertion, espace qui est délimité par le fait qu'un moyen (42) d'étanchéité est prévu entre l'obturateur (14.1, 14.2) et la pièce (31.1, 31.2) d'insertion.

6. Ensemble (2, 3) de soupape suivant la revendication 5, **caractérisé par** les caractéristiques suivantes :
6.1 la chambre (26.1, 26.2) de pilotage est délimitée par le deuxième élément (31.12, 31.22) partiel de la pièce (31.1, 31.2) d'insertion et par l'obturateur (14.1, 14.2) ;
6.2 le moyen (42) d'étanchéité est disposé entre le deuxième élément (31.12, 31.22) partiel de pièce d'insertion et l'obturateur (14.1, 14.2).

7. Ensemble (2, 3) de soupape suivant la revendication 6, **caractérisé en ce que** le moyen (42.1, 42.2) d'étanchéité est réalisé sous la forme d'une membrane, qui est fixée sur la face (30.1, 30.2) frontale de l'obturateur (10.1, 10.2) de soupape principale qui est éloignée de la chambre (17.1, 17.2) d'admission, et qui est serrée sur un des deux éléments (31.11, 31.12, 31.21, 31.22 ) partiels de pièce d'insertion ou entre le premier élément (31.11, 31.21) partiel de pièce d'insertion et le deuxième élément (31.12, 31.22) partiel de pièce d'insertion.

8. Ensemble (2, 3) de soupape suivant l'une des revendications 1 à 7, **caractérisé en ce que** la chambre (26.1, 26.2) de pilotage est directement limitrophe de la soupape (8.1, 8.2) de pilotage.

9. Ensemble (2, 3) de soupape suivant l'une des revendications 1 à 8, **caractérisé en ce que** le dispositif (4.1, 4.2) d'actionnement comprend au moins un aimant (5.1, 5.2) d'actionnement et un induit (6.1, 6.2) couplé à cet aimant.

10. Ensemble (2, 3) de soupape suivant la revendication 9, **caractérisé en ce que** l'aimant (5.1, 5.2) d'actionnement possède une courbe caractéristique ascendante course/courant électrique, donc agit en traction.

11. Ensemble (2, 3) de soupape suivant la revendication 10, **caractérisé en ce que** l'aimant (5.1, 5.2) d'actionnement possède une courbe caractéristique descendante course/courant électrique, donc agit en compression.

12. Ensemble (2, 3) de soupape suivant l'une des revendications 1 à 11, **caractérisé en ce qu'**un moyen d'étanchéité respectif est prévu entre la pièce (31.1, 31.2) d'insertion et les parois (32) du boîtier.

13. Ensemble (2, 3) de soupape suivant l'une des revendications 1 à 12, **caractérisé en ce que** la chambre (17.1) d'admission peut être reliée à une source de fluide sous pression, et la chambre (18.1) d'évacuation forme une chambre (19) de travail qui peut être accouplée à un utilisateur.

14. Ensemble (2, 3) de soupape suivant l'une des revendications 1 à 13, **caractérisé en ce que** la chambre (17.2) d'admission est formée par une chambre (19) de travail qui peut être accouplée à un utilisateur, et la chambre (18.2) d'évacuation peut être reliée à un espace de décharge.

15. Dispositif (1) combiné à soupapes
15.1 comportant un premier ensemble (2) de soupape, notamment un ensemble (2) de soupape à commande électromagnétique, suivant la revendication 13 ;
15.2 comportant un deuxième ensemble (3) de soupape, notamment un ensemble (3) de soupape à commande électromagnétique, suivant la revendication 14.

16. Dispositif (1) combiné à soupapes suivant la revendication 15, **caractérisé par** les caractéristiques suivantes :
16.1 comportant au moins trois raccords (23, 22, 24) accouplés aux chambres (17.1, 17.2, 18.1, 18.2) des ensembles (2, 3) de soupape ;
16.2 la chambre (17.1) d'admission du premier ensemble (2) de soupape peut être accouplée à une source de fluide sous pression ;
16.3 la chambre (18.1) d'évacuation du premier ensemble (2) de soupape et la chambre (17.2) d'admission du deuxième ensemble (3) de soupape peuvent être accouplées à au moins un utilisateur ;
16.4 la chambre (18.2) d'évacuation du deuxième ensemble (3) de soupape est formée par une chambre de décharge qui peut être accouplée à un espace de décharge.

17. Dispositif (1) combiné à soupapes suivant la revendication 16, **caractérisé en ce que** la chambre (17.2) d'admission du deuxième ensemble (3) de soupape et la chambre (18.1) d'évacuation du premier ensemble (2) de soupape sont formées par une chambre (19) de travail, qui est associée aux deux ensembles (2, 3) de soupape et qui peut être accouplée à un ou plusieurs utilisateurs par l'intermédiaire d'au moins un raccord (22).

18. Dispositif (1) combiné à soupapes suivant la revendication 17, **caractérisé en ce que** les raccords (22) vers l'utilisateur sont réunis en un bloc.

19. Dispositif (1) combiné à soupapes suivant l'une des revendications 15 à 18, **caractérisé en ce que** le dispositif (4.1, 4.2) d'actionnement et l'obturateur (14.1, 14.2) des deux ensembles (2, 3) de soupape sont de structure et de dimensions identiques.

20. Dispositif (1) combiné à soupapes suivant l'une des revendications 15 à 19, **caractérisé en ce que** les éléments (31.11, 31.12, 31.21, 31.22 ) partiels de pièce d'insertion des deux ensembles (2, 3) de soupape sont d'une structure et d'une conception telles qu'ils se soutiennent mutuellement.

21. Dispositif (1) combiné à soupapes suivant l'une des revendications 15 à 20, **caractérisé en ce que** la paroi (37) intermédiaire entre les deux ensembles (2, 3) de soupape est respectivement formée par un des éléments (31.11, 31.12, 31.21, 31.22 ) partiels de pièce d'insertion des deux ensembles (2, 3) de soupape.

22. Dispositif (1) combiné à soupapes suivant l'une des revendications 15 à 21, **caractérisé en ce que** les deux ensembles (2, 3) de soupape comportent une membrane commune pour délimiter les chambres (26.1, 26.2) de pilotage entre les obturateurs (14.1, 14.2) et les pièces (31.1, 31.2) d'insertion.

23. Dispositif (1) combiné à soupapes suivant l'une des revendications 15 à 22, **caractérisé en ce qu'**un équipement (39) pour relever la pression est disposé dans la chambre (19) de travail.

24. Dispositif (1) combiné à soupapes suivant l'une des revendications 15 à 23, **caractérisé en ce qu'**il forme une unité modulaire avec un appareil (43) de commande.
